# EUROPÄISCHE PATENTANMELDUNG

(11) **EP 1 277 655 A1**
(43) Veröffentlichungstag der Anmeldung: **22.01.2003**
(21) Anmeldenummer: 02015472.0
(22) Anmeldetag: 12.07.2002
(51) Int. Cl.: B64C 21/04, B63B 1/38

(54) **Verfahren zur Verminderung des Reibungswiderstandes einer von einem Medium umströmten Oberfläche**

(30) Priorität: 20.07.2001 DE 10135502
(71) Anmelder: Airbus Deutschland GmbH, 21129 Hamburg (DE)
(72) Erfinder: Zabka, Werner, Dr.-Ing., 21614 Buxtehude (DE)
(74) Vertreter: Hansmann, Dierk, Dipl.-Ing.

(57) **Zusammenfassung**

Um eine Reduzierung des Reibungswiderstandes an umströmten Oberflächen (1) zu erzielen, wird erfindungsgemäß vorgesehen, daß ein gasförmiges Medium (4) über in der umströmten Oberfläche vorhandene Austrittsöffnungen (3) zwischen die Grenzschicht des Stömungsmediums und die feste Oberfläche ausgeblasen wird, und daß ein gasförmiges Medium (4) verwendet wird, dessen molekularen Eigenschaften sich von denjenigen des Strömungsmediums unterscheiden.

## Beschreibung

Die Erfindung betrifft ein Verfahren zur Verminderung des Reibungswiderstandes einer von einem Medium (Strömungsmedium) umströmten Oberfläche, vorzugsweise der Oberfläche eines Flugzeuges.

Es gibt verschiedene Möglichkeiten, den Widerstand an Tragflächen von Flugzeugen zu vermindern. So ist beispielsweise das Prinzip des Absaugens der auf eine Tragfläche auftreffenden Luftströmung allgemein bekannt. Danach werden durch Grenzschicht-Absaugung die Störungen an der Grenzschicht und damit der Widerstand durch Verwirbelungen reduziert. Ein anderes Verfahren besteht darin, in die Grenzschicht Luft einzublasen und der Grenzschicht damit Energie zuzuführen, um dadurch insbesondere bei in Strömungsrichtung konvex gewölbten Oberflächen eine vorzeitige Ablösung der Grenzschicht und damit eine Widerstandserhöhung zu vermeiden. Nachteiligerweise erfordern die bisher eingesetzten Vorrichtungen einen verhältnismäßig großen technischen Aufwand.

Der Erfindung liegt die Aufgabe zugrunde, den bisher beschrittenen Weg zu verlassen und ein Verfahren der eingangs genannten Art vorzuschlagen, mit dem eine Reduzierung des Reibungswiderstandes an umströmten Oberflächen erzielt wird.

Die Aufgabe wird erfindungsgemäß dadurch gelöst, daß ein gasförmiges Medium über in der umströmten Oberfläche vorhandene Austrittsöffnungen zwischen die Grenzschicht des Stömungsmediums und die feste Oberfläche ausgeblasen wird, und daß ein gasförmiges Medium verwendet wird, dessen molekularen Eigenschaften sich von denjenigen des Strömungsmediums unterscheiden.

Zwei Ausgestaltungen der Erfindung sind darin zu sehen,
- daß ein niedermolekulares gasförmiges Medium verwendet wird, dessen Masseteilchen kleiner sind als die Masseteilchen des Strömungsmediums, und
- daß ein höhermolekulares gasförmiges Medium verwendet wird, dessen Masseteilchen größer sind als die Masseteilchen des Strömungsmediums.

Ein wesentlicher Vorteil der Erfindung besteht darin, daß eine Verminderung des Reibungswiderstandes nicht primär durch eine Beeinflussung der Grenzschicht erreicht wird, sondern dadurch, daß die auf die umströmte Oberfläche wirkenden Tangentialimpulse des Strömungsmediums direkt beeinflußt werden. Es besteht ein ausreichendes technisches Potential zur Verminderung des Reibungswiderstandes durch Ausblasen einer extrem dünnen Schicht eines gasförmigen Mediums zwischen die umströmte Oberfläche und die Grenzschicht des Strömungsmediums. Hierbei bedeutet der Begriff "extrem dünne Schicht" im gaskinetischen Sinn, daß die Dicke der Schicht des zwischen Grenzschicht und Oberfläche eingeblasenen Mediums nur wenige freie Weglängen beträgt.

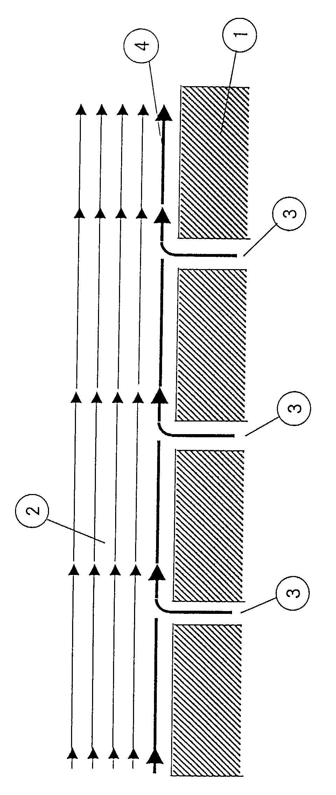

In der Zeichnung ist eine Vorrichtung zur Durchführung des erfindungsgemäßen Verfahrens teilweise dargestellt. Die einzige Figur zeigt einen kleinen Ausschnitt einer Tragflügeloberfläche 1, die von einem Strömungsmedium 2 umströmt ist. Die Strömungsrichtung des Mediums 2 ist durch Pfeile gekennzeichnet. Die Tragflügeloberfläche 1 weist eine Reihe von Austrittsöffnungen 3 auf, durch welche ein gasförmiges Medium 4 zwischen die Tragflügeloberfläche 1 und die Grenzschicht des Strömungsmediums 2 ausgeblasen wird.

## Patentansprüche

1. Verfahren zur Verminderung des Reibungswiderstandes einer von einem Medium (Strömungsmedium) umströmten Oberfläche, vorzugsweise der Oberfläche eines Flugzeuges, **dadurch gekennzeichnet, daß** ein gasförmiges Medium (4) über in der umströmten Oberfläche (1) vorhandene Austrittsöffnungen (3) zwischen die Grenzschicht des Stömungsmediums (2) und die feste Oberfläche (1) ausgeblasen wird, und daß ein gasförmiges Medium (4) verwendet wird, dessen molekularen Eigenschaften sich von denjenigen des Strömungsmediums (2) unterscheiden.

2. Verfahren nach Anspruch 1, **dadurch gekennzeichnet, daß** ein niedermolekulares gasförmiges Medium (4) verwendet wird, dessen Masseteilchen kleiner sind als die Masseteilchen des Strömungsmediums (2).

3. Verfahren nach Anspruch 1, **dadurch gekennzeichnet, daß** ein höhermolekulares gasförmiges Medium (4) verwendet wird, dessen Masseteilchen größer sind als die Masseteilchen des Strömungsmediums (2).
